# EUROPÄISCHE PATENTANMELDUNG

(11) **EP 1 263 122 A1**
(43) Veröffentlichungstag der Anmeldung: **04.12.2002**
(21) Anmeldenummer: 02007802.8
(22) Anmeldetag: 06.04.2002
(51) Int. Cl.: H02K 41/03

(54) **Rotationssymmetrischer Linearantrieb mit doppelseitiger Aktuatoranordnung**

(30) Priorität: 30.05.2001 DE 10126211
(71) Anmelder: Bayerische Motoren Werke Aktiengesellschaft, 80809 München (DE)
(72) Erfinder: Kellermann, Helmut, Dr., 85764 Oberschleissheim (DE); Anders, Markus, 61137 Schöneck (DE)

(57) **Zusammenfassung**

Die Erfindung bezieht sich auf einen elektrischen Linearantrieb, insbesondere zur Hubsteuerung eines Gaswechselspiels einer Brennkraftmaschine, mit einem elektromagnetisch steuerbaren und hubbeweglich angeordneten zylindrischen Läufer (8) und einem zylindrischen Ständer (7) mit jeweils einer ein- oder mehrphasigen Wicklung oder Wicklungen (3). Der zylindrische Läufer (8) weist eine rotationssymmetrische Form mit radial magnetisierten Permanentmagneten (2) auf, wobei der Ständer (7) oder der Läufer (8) als eine aus einem zylindrischen Innenteil (5) und einem zylindrischen Außenteil (4) mit einander fluchtend zugewandt angeordneten Wirkpolen bestehende doppelseitige Aktuatoranordnung ausgebildet ist. Durch den Einsatz von radial magnetisierten Permanentmagneten und den durch die doppelseitige Aktuatoranordnung hervorgerufenen doppelten Luftspalt ergibt sich eine Krafterhöhung bei geringer bewegter Masse. Ferner führt der rotationssymmetrische Aufbau aufgrund seiner Drehbarkeit zu einer Reduzierung von Verschleiss und Reibung.

## Beschreibung

Die Erfindung bezieht sich auf einen Linearantrieb nach dem Oberbegriff des Patentanspruchs 1, der insbesondere zur Hubsteuerung eines Gaswechselspiels einer Brennkraftmaschine verwendet wird.

Es sind verschiedene Ausgestaltungen zur Ventilsteuerung bei Verbrennungsmotoren aus dem Stand der Technik bekannt. So ist beispielsweise aus der DE 195 18 056 A1 eine Gasventilsteuerung mit einem Gaswechselventil bekannt, das durch eine Elektromagnetanordnung betätigt wird. Große Probleme beim Einsatz einer Elektromagnetanordnung zur Betätigung des Ventils stellen die hohe Geräuschentwicklung beim Erreichen der jeweiligen Endstellungen, das abrupte Abbremsen beim Erreichen der Endstellungen, sowie die erforderlichen hohen Halteströme dar.

Aus den Druckschriften DE 42 17 357 C2, DE 197 23 923 A1, DE 197 51 176 A1 und EP 0 390 519 B1 ist jeweils ein Linearantrieb der eingangs genannten Art bekannt. Die offenbarten Ventilanordnungen weisen einen in einem Ständer konzentrisch angeordneten elektrischen Läufer auf, der mit einem Ventilglied gekoppelt ist und dieses betätigt.

So umfasst beispielsweise der in der DE 42 17 357 C2 gezeigte Linearantrieb einen zylindrischem Luftspalt und ringförmigen Spulen in Nuten des Ständers, wobei der Ständer Ringscheiben, die in einer Schichtung mit den Spulen abwechseln, und ein außen anliegendes Ständerjoch und der Läufer Ringscheiben aufweist. Die Ringscheiben des Läufers wechseln in einer Schichtung mit Leiterringen ab, wobei die Ringscheiben und ein innen anliegendes Läuferjoch die Nuten für die Leiterringe bilden. Durch diese Anordnung kann ein axial kompakter Aufbau erreicht werden.

Der in der DE 197 23 923 A1 offenbarte Linearantrieb dient in einer Ventilanordnung als Aktuator für ein Ventilglied, und weist einen mit dem Ventilglied gekoppelten Läufer auf, wobei der Ständer aus Blechen aufgebaut ist, deren Fläche senkrecht zur Bewegungsrichtung des Läufers orientiert ist, und der Ständer dem Läufer zugewandte Zähne aufweist, die jeweils eine geschlossene, dem Läufer zugewandte Mantelfläche haben. Diese Anordnung ermöglicht eine kleine Polteilung und damit eine hohe Kraftdichte und genaue Krafteinstellung entlang des Hubweges.

Der aus der DE 197 51 176 A1 bekannte Linearantrieb umfasst einen in einem Lager geführten spulenartigen Schlitten, wobei das Lager einen radial magnetisierten Ringmagneten aufweist. Dadurch wird eine verstärkte magnetische Wirkung bei weit ausgefahrenem Schlitten erzielt, so dass eine schnellere Hubbewegung erreichbar ist.

Der Linearantrieb gemäß der EP 0 390 519 B1 besteht aus einem mit einem Ventil gekoppelten bewegbaren ringförmigen Permanentmagneten mit axial versetzten Polen, der von einer Spulenanordnung mit festen axial beabstandeten Magnetpolen umgeben ist. Die Spulenanordnung ist so ausgestaltet, dass sich eine hohe Antriebskraft zu Beginn des Ventilöffnungsvorgangs und am Ende des Ventilschließvorgangs ergibt.

Bei den vorgenannten Linearantrieben ergibt sich jedoch ein reibungs- bzw. anschlagbedingter Verschleiss aufgrund der auf die Wicklungen wirkenden betriebsbedingten Rüttelkräfte. Darüber hinaus ist die Geräuschentwicklung beachtlich.

Auch die DE 199 10 065 C1 offenbart einen Linearantrieb der eingangs genannten Art, bei dem der Ständer durch wenigsten zwei einander im Abstand koaxial umgebende, als Polygonhohlzylinder gestaltete Eisenblechstapel gebildet ist, deren Bleche im wesentlichen quer zur Bewegungsrichtung des Läufers orientiert sind. Der Läufer ist ein mit einem Ventilglied einer Steuerventilanordnung gekoppelter Hybridläufer und weist wenigstens zwei einander im Abstand koaxial umgebende im wesentlichen aus Eisenblech gebildete Polygonhohlzylinder auf, wobei diese und die hohlzylindrisch gestalteten Blechstapel des Ständers unter Bildung jeweils eines Luftspaltes ineinandergreifend einander zumindest teilweise umgeben. Die Polygonzylinderform erlaubt eine einfache Herstellung und Montage des Linearantriebs. Ferner ermöglicht die mehrteilige konzentrische Anordnung der Ständerwicklungen eine Verringerung der auf die Wicklungen wirkenden Rüttelkräfte, so dass Vibrationen der Wicklungen oder Reibung an den Blechen verringert sind.

Bei dem vorgenannten, auf dem Reluktanzeffekt beruhenden Linearantrieb mit mehrteiligem Ständer ist jedoch nicht die bspw. für eine Ventilsteuerung bei hohen Drehzahlen erforderliche Kraft, Dynamik und Bauraum erreichbar, um ein Ventil innerhalb einer maximal verfügbaren Zeit gegen einen anstehenden Gasdruck zu öffnen.

Es ist daher Aufgabe der vorliegenden Erfindung, einen verschleiß- und geräuscharmen Linearantrieb mit verbesserter Kraft und Dynamik bereitzustellen.

Diese Aufgabe wird gemäß Patentanspruch 1 dadurch gelöst, dass der zylindrische Läufer eine rotationssymmetrische Form mit radial magnetisierten Permanentmagneten aufweist, und dass der Ständer oder der Läufer als eine aus einem zylindrischen Innenteil und einem zylindrischen Außenteil mit einander fluchtend zugewandt angeordneten Wirkpolen bestehende doppelseitige Aktuatoranordnung ausgebildet ist.

Durch Einsatz von radial magnetisierten Permanentmagneten und den durch die doppelseitige Aktuatoranordnung hervorgerufenen doppelten Luftspalt an den bewegten Permanentmagneten ergibt sich eine Krafterhöhung bei geringer bewegter Masse. Ferner führt der rotationssymmetrische Aufbau aufgrund seiner Drehbarkeit in Verbindung mit der aufgrund der Verwendung des Synchronprinzips anschlaglosen Natur des Linearantriebs zu einer Reduzierung von Verschleiß und Reibung. Darüber hinaus ist keine Anfangsjustierung erforderlich. Da der Linearantrieb ein lineares Systemverhalten zeigt und das Synchronprinzip einen variablen Hub erlaubt, ist unter anderem auch eine sensorlose Regelung möglich.

Die doppelseitige Aktuatoranordnung kann alternativ durch eine Kombination aus Innen- und Außenständer mit dazwischen angeordnetem Läufer oder durch eine Kombination aus Innen- und Außenläufer mit dazwischen angeordnetem Ständer ausgestaltet sein. Die Permanentmagnete sind vorzugsweise als Ringmagnete oder Axialpermanentmagnete ausgebildet. Die ein- oder mehrphasige Wicklung oder Wicklungen können als Nut-Zahn- oder Luftspaltwicklung ausgebildet sein. Sowohl der zylindrische Läufer als auch der zylindrische Ständer können aus einem geblechten oder massiven weichmagnetischen Material gebildet sein.

Gemäß einer vorteilhaften Weiterbildung sind die Permanentmagnete mit alternierenden Magnetpolen angeordnet.

Gemäß einer anderen vorteilhaften Weiterbildung weisen das Innen- und Außenteil unterschiedliche radiale Ausdehnungen auf. Es ist auch möglich, dass der bewegliche Teil nicht mittig zwischen Innen- und Außenteil angeordnet ist. Durch einen solchen unsymmetrischen Aufbau kann die Abfuhr der Verlustwärme erleichtert werden.

Gemäß einer weiteren vorteilhaften Weiterbildung weist der Läufer einen topfförmigen Träger auf, an dessen zylindrischem Trägermantel Ringmagnete befestigt sind, wobei der Trägermantel aus einem nichtmagnetischen Material gebildet ist.

Als vorteilhafte Weiterbildung kann auch der Läufer an jedem zweiten Pol anstelle eines Permanentmagneten ein weichmagnetisches Material aufweisen, wodurch Magnetmaterial eingespart werden kann.

Der Linearantrieb kann bspw. als Hubaktuator für ein Gaswechselspiel einer Brennkraftmaschine oder als aktives Feder-Dämpfer-Element und/oder als Verstellelement für ein aktives Fahrzeug-Fahrwerk ausgebildet sein.

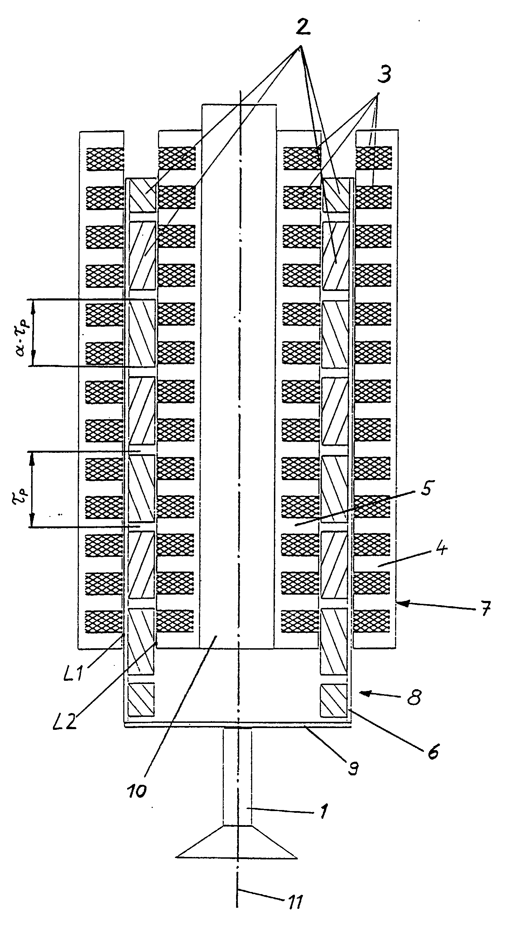

Die Erfindung wird nachfolgend anhand eines Ausführungsbeispiels unter Bezugnahme auf die Zeichnung näher erläutert. Die einzige Zeichnungsfigur zeigt eine Ventilanordnung mit einem rotationssymmetrischen elektrischen Linearantrieb schematisch im Längsschnitt. Gemäß dem Ausführungsbeispiel wird der Linearantrieb als Aktuator für ein Ventilglied eines ventilgesteuerten Verbrennungsmotors eingesetzt.

Die in der Figur dargestellte Ventilanordnung zeigt lediglich den Antriebsteil und das Ventilglied 1 für den ventilgesteuerten Verbrennungsmotor. Die für das Verständnis der Erfindung nicht weiter relevanten Teile der Ventilanordnung und des Verbrennungsmotors sind aus Übersichtlichkeitsgründen nicht weiter veranschaulicht.

Der Verbrennungsmotor hat einen (nicht gezeigten) Verbrennungszylinder, an dessen oberem Ende zumindest eine Steuerventilanordung mit einem elektrischen Linearantrieb gemäß der Figur als Aktuator für das Ventilglied 1 angeordnet ist. Der Linearantrieb weist einen mit der Ventilstange des Ventilglieds 1 gekoppelten topfförmigen Läufer 8 auf, der zwischen einem geblechten oder massiven äußeren Ständer 4 und einem geblechten oder massiven inneren Ständer 5 hubbeweglich geführt ist. Somit ist eine zweiteilige Ständeranordnung 7 als doppelseitige Aktuatoranordnung gebildet. Der Linearantrieb ist rotationssymmetrisch zu einer Symmetrieachse 11 ausgebildet.

Gemäß der Darstellung in der Figur ist der als Hohlzylinder ausgestaltete innere Ständer 5 auf einer Trägerwelle 10 fixiert und weist Nuten und Zähne auf. Auch der mit dem inneren Ständer 5 starr gekoppelte äußere Ständer 4 weist entsprechende Zähne und Nuten auf, die den Zähnen und Nuten des inneren Ständers 5 radial fluchtend gegenüberstehen, wobei der Läufer 8 dazwischen geführt ist. In den äußeren und inneren Ständernuten befinden sich ringförmige Wicklungen 3. Der topfförmige Läufer 8 besteht aus einem vorzugsweise nichtmagnetischen zylinderförmigen Läuferrücken 6 mit einer Bodenplatte 9, die mit dem Ventilglied 1 gekoppelt ist, so dass die Hubbewegung des Läufers 8 auf das Ventilglied 1 übertragen wird. An der Innenseite des Läuferrückens 6 sind als radial magnetisierte Ringmagnete ausgestaltete Permanentmagnete 2 angebracht, deren axiale Länge und axialer Abstand von der gewählten Polteilung τp und Polbedeckung ατp abhängig ist. Zwischen der inneren Oberfläche des äußeren Ständers 4 und der äußeren Oberfläche des Läufers 8 ist ein äußerer Luftspalt L1 gebildet. Des weiteren ist ein innerer Luftspalt L2 zwischen der äußeren Oberfläche des inneren Ständers 5 und der inneren Oberfläche des Läufers 8 gebildet.

Im folgenden werden konkrete Ausgestaltungsmöglichkeiten des in der Figur gezeigten Linearantriebs für eine Kraftentwicklung von mehr als 600N bei einem Hubweg von 8 bis 10mm, einer Ventilmasse von 60g, einer Dauer des Öffnungsvorgangs (5% bis 95% des Hubwegs) von 3ms, einer Nennspannung von 42V und einem maximal zulässigen Spitzenstrom von 30A dargestellt.

Der Beschleunigungsverlauf ist vorzugsweise trapezförmig, damit sprunghafte, zur Schwingungserregung führende Kraftänderungen vermieden werden. Der Linearantrieb muss so ausgestaltet sein, dass er die Summe aus der erforderlichen Beschleunigungskraft und der Ventilkraft in beiden Hubrichtungen aufbringen kann. Daher erhöht sich die erforderliche Gesamtkraft auf ca. 700N. Die durch einen geschalteten Reluktanzaktuator erzielbare Kraft pro axialer Länge liegt bei gleichem Bauvolumen und gleicher Stromdichte deutlich unterhalb des in der Figur gezeigten permanenterregten bürstenlosen Aktuators. Zudem ist bei der einphasigen Variante des Reluktanzaktuators eine Kraftbildung in nur einer Richtung möglich. Zur Minimierung der Baugröße des Linearantriebs wird daher der permanenterregte bürstenlose Aktuator eingesetzt. Die doppelseitige Aktuatoranordnung bspw. mit den in der Figur gezeigten inneren und äußeren Ständern 5, 4 führt zu um ca. 25% erhöhten Kraftwerten gegenüber einer einseitigen Aktuatoranordnung mit innenliegendem Ständer und gleicher Geometrie.

Eine einphasige Ausgestaltung, bei der den Ständerwicklungen 3 nur eine Wechselstromphase zugeführt wird, bietet den Vorteil, dass der Strom in der Phase bei bewegtem Läufer 8 seine Richtung nicht umkehren muss. Nachteilig gegenüber einer mehrphasigen Ausgestaltung sind jedoch das aufgrund des höheren magnetischen Rückflusses benötigte größere Bauvolumen oder die reduzierte Kraft bei gleichem Bauvolumen.

Durch Verwendung mehrerer Phasen können die Läuferpole unmittelbar nebeneinander angeordnet werden, wobei sichergestellt sein muss, dass die Stromrichtung an die Polarität des Läufermagnetfelds angepasst ist. Daher ist eine Stromumkehr in den Phasen in Abhängigkeit der Läuferbewegung erforderlich. Zudem ist ein Positionssignals des Läufers 8 relativ zur Ständeranordnung 7 erforderlich, um den Strombetrag und die Stromrichtung entsprechend einstellen zu können.

Als Ständermaterial können weichmagnetische Materialien wie bspw. spezielle Legierungen (z.B. Vacoflux 17) aus gesintertem Material, Pulvereisenmaterialien, Baustahl (St37) oder Standardelektrobleche verwendet werden. Dabei ist zu berücksichtigen, dass durch das gesinterte Material wie bspw. Vacoflux 17 aufgrund seiner höchsten Sättigungsflussdichte die höchste Kraftwirkung erreicht werden kann. Für das Magnetmaterial der Permanentmagnete 2 können hartmagnetische Materialien bspw. aus Samarium-Kobalt (Sm₂Co17) oder aus temperaturstabilisiertem Neodym-Eisen-Bohr (NdFeB) Verwendung finden. Zur Einsparung der erforderlichen Magnetmaterialmenge kann das Permanentmaterial der Permanentmagnete 2 an jedem zweiten Läuferpol durch weichmagnetisches Material ersetzt werden, so dass nur an jedem zweiten Läuferpol ein Permanentmagnet 2 vorgesehen ist. Dabei reduziert sich jedoch die erzielbare Kraft auf ca. 75% der Kraft bei vollem Magneteinsatz.

Die Trägerwelle 10 und der innere Ständer 5 können zusammengefasst und aus vollem Material (z.B. Baustahl St37) gefräst sein. Alternativ dazu können die Trägerwelle 10 aus Baustahl und der innere Ständer 5 aus Trafoperm- oder Vacoflux-Ringen gefertigt sein, wodurch Wirbelströme reduziert und die mechanischen Eigenschaften verbessert werden. Der Läuferrücken 6 kann aus einem nichtmagnetischen Stahlrohr gebildet sein. Der äußere Ständer 4 kann aus Trafoperm- oder Vacoflux-Ringscheiben oder aus einem Pulververbundwerkstoff aufgebaut sein.

Zur Realisierung der vorstehend angegebenen Vorgaben ergeben sich als Beispiel für die konkreten Abmessungswerte ein Radius der Trägerwelle 10 von 3,7mm, eine radiale Höhe des Ständerrückens von 0,8 mm, eine radiale Höhe des Läuferrückens 6 von 0,5mm, eine radiale Tiefe der Ständernuten von 4,8 mm, eine axiale Breite der Ständerzähne von 0,9mm, axiale Breite der Ständernuten von 2,1mm, eine radiale Magnethöhe der Permanentmagnete 2 von 1,3mm, ein Polbedeckungsfaktor α von 0,875, eine Polteilung τp von 9mm, ein mechanischer Luftspalt (L1 bzw. L2) von 0,5mm (bei zentriertem magnetischen Läuferrücken 6) und eine axiale Baulänge von 108mm.

Die Polteilung kann vorzugsweise als Vielfaches des Bewegungsbereiches gewählt werden, damit kein unnötiger Überhang an den Enden (Randpolen) entsteht. Kleine Polteilungen sind vorteilhaft, da diese eine verringerte notwendige Höhe des Läuferrückens 6 und des Ständerrückens ermöglichen und da lokale Sättigungseffekte dann aufgrund der geringeren Rückflussweglängen lediglich vernachlässigbare magnetische Spannungen hervorrufen.

Die Ständerzähne werden zur Flussführung benötigt. Dabei wird aber bei einer Erhöhung der Zahnbreite der für die Wicklungen 3 zur Verfügung stehende Raum kleiner. Das Verhältnis zwischen Ständerzahnbreite und Polteilung τp sollte für eine optimale Kraftentwicklung ungefähr 0,3 betragen. Die Nuttiefe wird durch die von der Höhe des Ständerrückens abhängige magnetische Sättigung des Ständerrückens begrenzt. Somit ergibt sich die Ständerzahnhöhe aus der vorgegebenen Ständerrückenhöhe und dem vorgegebenen Außendurchmesser der als Magnetringe gebildeten Permanentmagnete 2.

Der Füllfaktor der Wicklungen 3 ist aufgrund der notwendigen Leiterisolierung und der verwendeten Wickeltechnik (Hand- oder Automatenwicklung) kleiner als 1. Auch müssen bei der Verwendung von Ringwicklungen Querverbindungen vorgesehen werden, die einen Teil des Nutvolumens einnehmen. Es lässt sich daher ein die tatsächliche Strombelastung des Wicklungsleiters bestimmender Füllfaktor von 0,4 bis 0,6 realisieren.

Zur Erzeugung eines Wanderfelds in dem Ständer 8 sind zwei Phasen ausreichend, wobei die Lochzahl (Nuten pro Pol und Phase) erhöht wird (z.B. von 1 auf 2). Die Nutzahl steigt damit bspw. von 9 (3 Ständerpole und 3 Nuten pro Pol) auf 12 (drei Ständerpole und 4 Nuten pro Pol). Die Zahn- und Nutbreite muss dabei entsprechend angepasst werden.

Der Linearantrieb kann als reiner Linearaktuator, als Feder-Linearaktuator-Haltesystem-Kombination mit einer Feder (z.B. mit progressiver Kennline) als Energiespeicher beim Öffnen des Ventilglieds 1, die beim Schließen des Ventils gespannt wird, wobei das bspw. durch eine Spulenanordnung gebildete Haltesystem zum stromarmen Halten der Federvorspannung ohne Aktivierung des Linearaktuators dient, oder als Hubmagnet-Linearaktuator-Kombination mit einem Hubmagnetsystem zum Öffnen und Beschleunigen des Ventilglieds 1, wobei der Linearaktuator danach den Beschleunigungsvorgang übernimmt.

Bei einem reinen Linearaktuator werden für die vorgenannten Anforderungen mindestens 11 Läuferpole benötigt. Bei einer Federunterstützung muss der Linearaktuator bspw. nur noch die Hälfte der erforderlichen Gesamtkraft aufbringen, so dass mindestens 5 Läuferpole bei entsprechend verringerter Läuferlänge benötigt werden. Bei einer einschichtigen Ringwicklung ist gemäß W. Deleroi, "Einfluß der Ständerwicklungsanordnung auf das Betriebsverhalten von asynchronen Linearmotoren", ETZ-A, Bd. 95, S. 601-606, 1974 eine gerade Ständerpolzahl vorteilhaft. Daher wird die Ständerpolzahl in beiden Fällen vorzugsweise um einen Pol erhöht, so dass sich 12 Ständerpole für den reinen Linearaktuator und 6 Ständerpole für den Linearaktuator mit Federunterstützung ergeben.

Abweichend von dem in der Figur gezeigten symmetrischen Aufbau des Linearantriebs ist auch ein unsymmetrischer Aufbau möglich, bei dem die radialen Abmessungen des inneren und äußeren Ständers 5, 4 voneinander abweichen. Wird dabei die Nuttiefe des inneren Ständers 5 größer gewählt als die Nuttiefe des äußeren Ständers, so ergibt sich eine vorteilhafte Verlagerung der Verlustwärmeerzeugung zum äußeren Ständer 4, wo sie leichter abgeführt werden kann. Der unsymmetrische Aufbau kann beispielsweise durch die Vorgabe bestimmte Magnetringabmessungen bedingt sein. Für beide Aufbauarten kann eine hohe Windungszahl mit kleinem Leiterquerschnitt oder eine niedere Windungszahl mit großem Leiterquerschnitt gewählt werden. Für den symmetrischen Aufbau kann eine hohe Windungszahl von 20 und eine niedere Windungszahl von 12 am inneren und äußeren Ständer 5, 4 gewählt werden. Für den unsymmetrischen Aufbau kann eine hohe Windungszahl von 16 und eine niedere Windungszahl von 9 am inneren Ständer 5 und eine hohe Windungszahl von 32 und eine niedere Windungszahl von 18 am äußeren Ständer 4 gewählt werden, wobei der innere Ständer 5 bspw. eine Nuttiefe von 4,1mm und der äußere Ständer 4 bspw. eine Nuttiefe von 6,1mm aufweist.

Der Läuferrücken 6 kann auch zentral angeordnet sein, wobei an beiden Seiten Permanentmagnete 2 angebracht sind und der Läuferrücken 6 aus magnetischem Material besteht. Die in der Figur gezeigte Anordnung des Läuferrückens 6 am Außenrand des Läufers 8 ermöglich aber einerseits eine außenliegende Lagerfläche und zum anderen eine Halbierung der Anzahl erforderlicher Permanentmagnete 2. Allerdings muss der Läuferrücken 6 dann nichtmagnetisch sein. Dieser Nachteil kann durch Rücknahme des inneren Luftspalts L2 von 0,5mm auf 0,3mm und durch Rücknahme des äußeren Luftspalts L1 von 0,5mm auf 0,2mm kompensiert werden.

Als Alternative zu dem vorstehend beschriebenen Ausführungsbeispiel gemäß der Darstellung in der Figur kann der doppelseitige Aktuatoraufbau mit zwei Luftspalten auch durch Bereitstellung eines Innen- und Außenläufers mit dazwischen angeordnetem Ständer realisiert werden. In diesem Fall ist des Ventilglied 1 mit dem inneren und/oder äußeren Läufer gekoppelt. Der Innen- und Aussenläufer weisen an ihrer Innenseite einander fluchtend zugewandte und radial magnetisierte Permanentmagnetpole auf.

Die in dem vorstehend beschriebenen Ausführungsbeispiel genannten Abmessungen dienen lediglich zur Veranschaulichung der Geometrieverhältnisse des Linearantriebs für einen konkreten Einzelfall. Selbstverständlich kann der Linearantrieb abhängig von den individuellen Leistungsvorgaben abweichende Abmessungen, Materialien, Pol und/oder Windungszahlen aufweisen. Die konkrete Ausgestaltung des Linearantriebs kann im Rahmen des Umfangs der Patentansprüche abgewandelt werden.

## Patentansprüche

1. Elektrischer Linearantrieb, insbesondere zur Hubsteuerung eines Gaswechselspiels einer Brennkraftmaschine, mit einem elektromagnetisch steuerbaren und hubbeweglich angeordneten zylindrischen Läufer (8) und einem zylindrischen Ständer (7) mit jeweils einer ein- oder mehrphasigen Wicklung oder Wicklungen (3), **dadurch gekennzeichnet,**
**dass** der zylindrische Läufer (8) eine rotationssymmetrische Form mit magnetisierten Permanentmagneten (2) aufweist, und dass der Ständer (7) oder der Läufer (8) als eine aus einem zylindrischen Innenteil (5) und einem zylindrischen Außenteil (4) mit einander fluchtend zugewandt angeordneten Wirkpolen bestehende doppelseitige Aktuatoranordnung ausgebildet ist.

2. Elektrischer Linearantrieb nach Anspruch 1, **dadurch gekennzeichnet,**
**dass** die Permanentmagnete (2) als oberflächenmontierte Ringmagnete oder Axialpermanentmagnete ausgebildet sind.

3. Elektrischer Linearantrieb nach einem der Ansprüche 1 oder 2, **dadurch gekennzeichnet,**
**dass** die ein- oder mehrphasige Wicklung oder Wicklungen (3) als Nut-Zahn- oder Luftspaltwicklung ausgebildet sind.

4. Elektrischer Linearantrieb nach einem der Ansprüche 1 bis 3, **dadurch gekennzeichnet,**
**dass** sowohl der zylindrische Läufer (8) als auch der zylindrische Ständer (7) einteilig aus einem geblechten oder massiven weichmagnetischen Material gebildet sind.

5. Elektrischer Linearantrieb nach einem der Ansprüche 1 bis 4, **dadurch gekennzeichnet,**
**dass** die Permanentmagnete (2) mit alternierenden Magnetpolen angeordnet sind.

6. Elektrischer Linearantrieb nach einem der Ansprüche 1 bis 5, **dadurch gekennzeichnet,**
**dass** das Innen- und Außenteil unterschiedliche radiale Ausdehnungen aufweisen.

7. Elektrischer Linearantrieb nach einem der Ansprüche 1 bis 6, **dadurch gekennzeichnet,**
**dass** der Läufer (6) einen topfförmigen Träger (6, 9) aufweist, an dessen zylindrischem Trägermantel (6) Ringmagnete (2) befestigt sind, wobei der Trägermantel (6) aus einem nichtmagnetischen Material gebildet ist.

8. Elektrischer Linearantrieb nach einem der Ansprüche 1 bis 7, **dadurch gekennzeichnet,**
**dass** der Läufer (8) an jedem zweiten Pol anstelle eines Permanentmagneten (2) ein weichmagnetisches Material aufweist.

9. Elektrischer Linearantrieb nach einem der Ansprüche 1 bis 6, **dadurch gekennzeichnet,**
**dass** der Linearantrieb als Hubaktuator für ein Gaswechselspiel einer Brennkraftmaschine ausgebildet ist.

10. Elektrischer Linearantrieb nach einem der Ansprüche 1 bis 6, **dadurch gekennzeichnet,**
**dass** der Linearantrieb als aktives Feder-Dämpfer-Element und/oder als Verstellelement für ein aktives Fahrzeug-Fahrwerk ausgebildet ist.
